# EUROPEAN PATENT APPLICATION

(11) **EP 3 539 735 A1**
(43) Date of publication of application: **18.09.2019**
(21) Application number: 18382163.6
(22) Date of filing: 13.03.2018
(51) Int. Cl.: B25J 11/00, B25J 15/04, B25J 15/08, B25J 15/00, B25J 19/02, A01D 46/30

(54) **ROBOTIC ARM END EFFECTOR FOR FRUIT HARVESTING**

(71) Applicant: Soluciones Robóticas Agrícolas S.L., 21700 La Palma del Condado (ES)
(72) Inventor: BRAVO TRINIDAD, Juan, 21700 La Palma del Condado (ES)
(74) Representative: Hoffmann Eitle

(57) **Abstract**

The present invention refers to an end effector for a robotic arm, specially adapted for strawberries harvesting. The end effector (1) comprises: a support (2) connectable to a robotic arm, an actuator (6) attached to the support (2), and configured for picking fruits, a box (11) attached to the support (2), the box (12) having at least one opening (12), an images processing unit housed within the box (12), a robotic arm controller housed within the box (12), a data connector and power connector suitable for their connection with a robotic arm, and a camera housed within the box (12) and operatively associated with the images processing unit, and arranged to capture images through the box opening (12). The invention simplifies maintenance and repair of robotic arms in agricultural environments, such as in case of failure or damage of any of its main components, the robotic arm can be put back into service as soon as possible.

## Description

### Object of the invention

The present invention refers in general to robotic harvesting of crops.

More specifically the invention refers to an end effector for a robotic arm, specially adapted for strawberries harvesting.

An object of the invention is to simplify maintenance and repair of robotic arms in agricultural environments, such as in case of failure or damage of any of its main components, the robotic arm can be put back into service as soon as possible.

### Background of the invention

Fruit and vegetables harvester robots are one of the major means of developing modern agricultural production, however, it is important that the machinery and tools are simple and easy to maintain and repair.

Traditionally, robotic arms for fruit harvesting include a vision and a recognition systems, for guiding an actuator, such as a gripper or cutter, towards a detected piece of fruit. The vision system includes a camera mounted on the robotic arm itself.

In case of damage or failure of any of the main components of the robotic arm, that component has to be replaced by a new one, and this repair process can be slow and affect productivity.

### Summary of the invention

The present invention is defined in the attached independent claim, and it based on the integration of the vision system, robotic arm controller and the actuator of a robotic arm, as an end effector for the robotic arm, that is, as a single component of a robotic arm, that can be easily and quickly replaced by another one in good order, in case of failure of any of those devices.

More specifically, an aspect of the invention refers to a robotic arm end effector for fruit harvesting, wherein the end effector comprises: a support connectable with a robotic arm, an actuator or fruit picker attached to the support, and a box attached to the support. Housed within the box, there are provided a vision system for locating fruits to be collected, a robotic arm controller adapted for controlling the movements of the robotic arm based on images captured and processed by the vision system.

Preferably, an antenna and a data connector and power connector suitable for their connection with a robotic arm, are also housed within the box.

The vision system includes a camera operatively associated with an images processing unit, such as the camera is arranged to capture images through a passing-through opening in the box.

Therefore, all the devices housed inside the box are protected from the environment where they operate, and in case of failure of any of them, the whole end effector can be quickly by replaced by a spare one in good order.

Preferably, the actuator is a gripper having two fingers and at least one a cutter mounted with one of the fingers.

The invention also refers to a robotic arm incorporating the above-defined end effector.

### Brief description of the drawings

Preferred embodiments of the invention are henceforth described with reference to the accompanying drawings, wherein:
Figure 1.- shows a perspective view of a preferred embodiment of an end effector according to the invention.

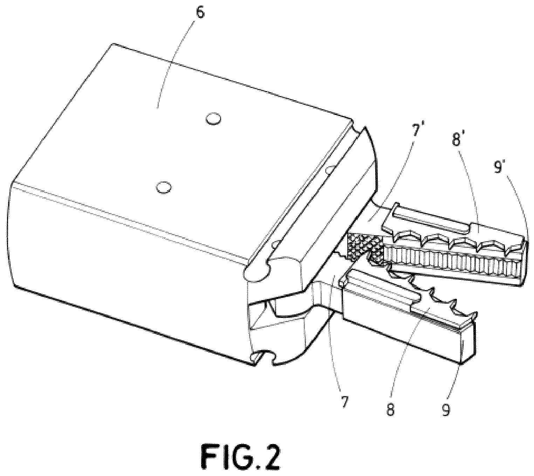

Figure 2.- shows a perspective view of a preferred embodiment of an actuator according to the invention.

### Preferred embodiment of the invention

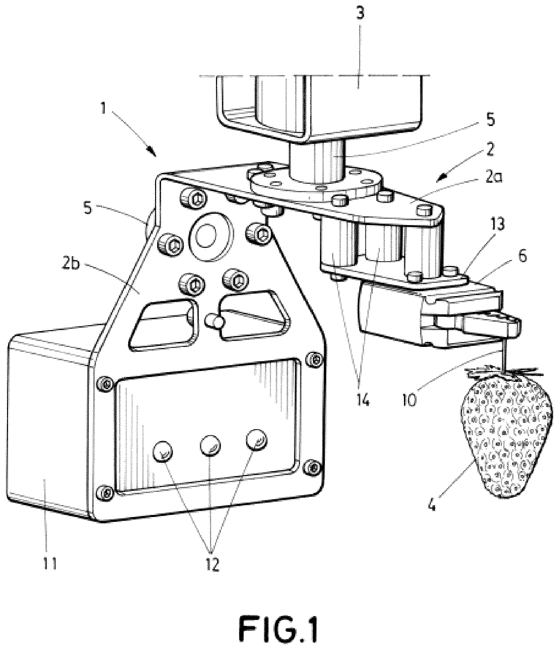

Figure 1 shows a preferred embodiment of an end effector (1) according to the invention, specially adapted for harvesting strawberries (4). The end effector (1) comprises a support (2) mechanically connectable with a robotic arm (3), by means of a conventional connector (5).

In this preferred embodiment, the support (2) has been obtained as a folded metallic plate having a L-shaped configuration, forming two plates (2a,2b).

An actuator of the end effector (1) is attached to a first plate (2a). In this case, the actuator is configured for picking fruits, and consist of a gripper (6) having two fingers (7,7') for picking and holding the peduncle of a strawberry. Preferably, the two fingers (7,7') are covered by two plastic covers (9,9'), fitted to the fingers by means of a clip, such as, these covers (9,9') can be replaced daily to assure good hygienic conditions of the fingers (7,7').

Two metallic cutters (8,8') are mounted respectively on the fingers (7,7'), and are are attached to the plastic covers (9,9'), so as to break the peduncle (10) of a strawberry by pulling the peduncle back.

A metallic and water resistant box (11), is attached to a second plate (2b) of the support (2), and some of the main devices of the robotic arm, are housed within this box (11). More in particular, the following devices and systems (not shown in the drawings) are housed inside the box (11):
- an images processing unit;
- a robotic arm controller;
- a data connector and power connector suitable for their connection with a robotic arm (3),
- a camera, such as a 3D camera with an infrared light source. The camera is operatively associated with the images processing unit, and arranged to capture images through box openings (12);
- at least one antenna, for example a wifi antenna/s.

Optionally, the second plate (2b) is provided with another connector (5) for connecting the end effector (1) in another position with the robotic arm (3).

Preferably and as shown in figure 1, the gripper (6) is displaceable with respect to the support (2). For this, the griper (6) is mounted with a metallic plate (13), which in turn is attached to the first plate (2a) by means of elastic members, for example rubber blocks (14). A movement detector, for example an inductive sensor, is mounted and adapted to detect relative movement between the plates (13) and (2a), that is, relative movement between the gripper (6) and the support (2). With this arrangement, any collision between the end effector (1) and any surrounding object, is detected by the inductive sensor.

Other preferred embodiments of the present invention are described in the appended dependent claims and the multiple combinations of those claims.

## Claims

1. A robotic arm end effector (1) for fruit harvesting, wherein the end effector (1) comprises:
a support (2) connectable to a robotic arm,
an actuator (6) attached to the support (2), and configured for picking fruits,
a box (11) attached to the support (2), the box (12) having at least one opening (12),
an images processing unit housed within the box (12),
a robotic arm controller housed within the box (12),
a data connector and power connector suitable for their connection with a robotic arm,
a camera housed within the box (12) and operatively associated with the images processing unit, and arranged to capture images through the box opening (12).

2. An end effector (1) according to claim 1, wherein the support (2) includes at least two connected plates (2a,2b), and wherein the actuator (6) is attached to one of the plates, and wherein the box (12) is attached to the other plate.

3. An end effector (1) according to claim 1 or 2, wherein the actuator (6) is displaceable with respect to the support (2), and wherein the end effector (2) further comprises a movement detector adapted to detect relative movement between the actuator (6) and the support (2).

4. An end effector (1) according to any of the preceding claims, wherein the actuator (6) is a gripper having two fingers (7,7') and at least one a cutter (8) mounted with one of the fingers (7,7').

5. An end effector (1) according to any of the preceding claims, further comprising at least one mechanic connector (5), for its attachment to a robotic arm (3).

6. An end effector (1) according to any of the preceding claims, further comprising two mechanic connectors (5) for its attachment to a robotic arm, wherein one connector (5) is mounted in one plate (2a) and the other connector is mounted in another plate (2b), such as the end effector (1) can be attached to a robotic arm in two different positions.

7. An end effector according to any of the preceding claims, further comprising an antenna housed within the box (12).

8. An end effector according to any of the preceding claims, wherein the camera is a depth camera with infrared light source.

9. An end effector according to claim 3, further comprising elastic element (14) and wherein the actuator (6) is attached to the support (2) by means of the elastic element (14), allowing relative movement between the actuator and the support.

10. The end effector of claim 1, wherein the support is a folded plate having a L-shaped configuration.

11. A robotic arm incorporating the end effector defined in any of the previous claims, wherein the robotic arm controller housed within the box, is operatively communicated with the robotic arm for controlling its movements.
